(19) Europäisches Patentamt / European Patent Office / Office européen des brevets

(11) **EP 3 514 896 A1**

(12) **DEMANDE DE BREVET EUROPEEN**

(43) Date de publication:
**24.07.2019 Bulletin 2019/30**

(51) Int Cl.:
*H01S 3/10* (2006.01)     *G02F 1/01* (2006.01)
*H01S 3/13* (2006.01)     *H01S 3/23* (2006.01)

(21) Numéro de dépôt: **19151455.3**

(22) Date de dépôt: **11.01.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **18.01.2018 FR 1800066**

(71) Demandeurs:
• **Compagnie Industrielle des Lasers Cilas**
**45100 Orléans (FR)**
• **Centre National de la Recherche Scientifique - CNRS**
**75016 Paris (FR)**
• **Université de Limoges**
**87032 Limoges (FR)**

(72) Inventeurs:
• **ARMAND, Paul**
**87000 LIMOGES (FR)**
• **SAUCOURT, Jérémy**
**87000 LIMOGES (FR)**
• **KERMENE, Vincent**
**87700 AIXE SUR VIENNE (FR)**
• **DESFARGES-BERTHELEMOT, Agnès**
**87270 COUZEIX (FR)**
• **BENOIST, Joël**
**87100 LIMOGES (FR)**
• **BARTHELEMY, Alain**
**87100 LIMOGES (FR)**
• **LEVAL, Julien**
**45750 SAINT-PRYVÉ-SAINT-MESMIN (FR)**

(74) Mandataire: **Gevers & Orès**
**41 avenue de Friedland**
**75008 Paris (FR)**

(54) **PROCÉDÉ ET SYSTÈME D'AJUSTEMENT DE PROFIL D'UN FRONT D'ONDE LASER**

(57) - Le système d'ajustement de profil d'un front d'onde laser formé d'au moins un faisceau laser, à un profil de front d'onde laser souhaité, le ou les faisceaux lasers présentant des phases quelconques et des intensités comprend un module de mélange (7), configuré pour générer, à partir de phénomènes d'interférence entre le ou les faisceaux lasers, un champ laser, un second module de mesure d'intensités (8) configuré pour mesurer des intensités mélangées de portions du champ laser, une unité de calcul (9), configurée pour calculer une ou des valeurs de correction de phase de la phase du faisceau laser ou des phases des faisceaux lasers, à partir des intensités des faisceaux lasers, des intensités mélangées et d'une ou de phases cibles prédéterminées, et un module d'ajustement de phase (10), configuré pour appliquer la ou les valeurs de correction de phase obtenues de l'unité de calcul (9), aux phases des faisceaux lasers.

Fig. 1

Printed by Jouve, 75001 PARIS (FR)

## Description

DOMAINE TECHNIQUE

La présente invention concerne un procédé et un système laser pour l'ajustement d'un profil de front d'onde laser quelconque formé d'un ou de plusieurs faisceaux lasers à un profil de front d'onde laser souhaité.

ÉTAT DE LA TECHNIQUE

Afin de générer des sources lasers de puissance élevée, la plupart des systèmes actuels reposent sur la combinaison cohérente d'un grand nombre de faisceaux lasers de même fréquence et de même phase. Cependant, les faisceaux lasers ne peuvent suivre des trajets optiques rigoureusement identiques et des différences de phases apparaissent entre les phases des faisceaux lasers. Pour résoudre ce problème, certains systèmes se basent sur une architecture d'amplification de puissance d'oscillateur maître (ci-après « MOPA » pour « Master Oscillator Power Amplifier » en anglais), dans laquelle un oscillateur maître génère un faisceau laser maître divisé en une pluralité de faisceaux lasers qui sont ensuite amplifiés par des amplificateurs. En amont de ces amplificateurs se trouvent des modulateurs de phase qui modifient la phase des faisceaux lasers. En aval de ces amplificateurs se trouve un dispositif de détection sensible à la phase des faisceaux lasers. Les informations produites par le dispositif de détection sont ensuite fournies aux modulateurs de phase. De tels systèmes comprennent donc une boucle d'asservissement de phase apte à corriger les écarts entre les phases des faisceaux lasers dus aux différences de trajet optiques.

On connaît, par le document WO2016062942, un procédé de génération de puissance laser élevée s'appuyant sur une boucle d'asservissement de phase comprenant un dispositif de détection basé sur un filtrage par contraste de phase. Ce procédé permet d'ajuster, de manière itérative, la phase de chacun des faisceaux lasers vers une même valeur de phase identique. Ce procédé est donc particulièrement efficace pour générer un front d'onde laser plan.

Or, la prise en compte de l'environnement que traverse un faisceau laser est un aspect important dans la génération de faisceau laser de puissance élevée, notamment dans une utilisation en astrophysique. En effet, l'environnement dans lequel évoluent les faisceaux lasers est une source supplémentaire de perturbations. Les faisceaux lasers forment alors un profil de front d'onde laser quelconque dont l'ajustement au profil d'un front d'onde laser souhaité est complexe.

Par ailleurs, on connaît également, par le document WO 2015181130, un système de phasage de sources lasers à configuration périodique. Ce système permet de recombiner un grand nombre de sources lasers diffractées sur un élément optique de recombinaison à réseau de phase périodique.

En outre, on connaît, par le document US 2011/280581, un procédé de recombinaison de laser. Ce procédé permet de générer un laser à haute puissance en égalisant les phases des lasers recombinés.

De plus, on connaît, par le document DE 10 2010 033630, un système d'amplification de faisceau laser. Ce système génère un faisceau de haute puissance par synchronisation des phases des faisceaux laser qui le composent.

EXPOSÉ DE L'INVENTION

La présente invention a pour objet de remédier à cet inconvénient, en proposant un procédé d'ajustement de profil d'un front d'onde laser formé d'au moins un faisceau laser, à un profil de front d'onde laser souhaité, le ou les faisceaux lasers présentant des phases quelconques et des intensités et le front d'onde laser formé du ou des faisceaux représentant un premier front d'onde laser.

À cet effet, le procédé d'ajustement de profil d'un front d'onde laser (ci-après « procédé ») est remarquable en ce qu'il comprend la succession itérative d'étapes suivante :

- une étape de mélange du ou des faisceaux lasers, mise en oeuvre par un module de mélange, consistant à générer, à partir de phénomènes d'interférence entre le ou les faisceaux lasers, un champ laser formant un second front d'onde laser ;
- une étape de mesure d'intensités, mise en oeuvre par un module de mesure d'intensités, consistant à mesurer des intensités mélangées du champ laser comprenant des portions de champ laser ;
- une étape de calcul de correction de phase, mise en oeuvre par une unité de calcul, consistant à calculer une ou des valeurs de correction de phase de la phase du faisceau laser ou des phases des faisceaux lasers, à partir des intensités du ou des faisceaux lasers, des intensités mélangées mesurées à l'étape de mesure d'intensités et d'une ou de phases cibles prédéterminées formant le profil du front d'onde laser souhaité ; et
- une étape d'ajustement de phase, mise en oeuvre par un module d'ajustement de phase, consistant à appliquer la ou les valeurs de correction de phase, obtenues à l'étape de calcul de correction de phase, à la phase du faisceau laser ou aux phases des faisceaux lasers, afin d'ajuster le profil du premier front d'onde laser au profil du front d'onde laser souhaité.

Ainsi, grâce à l'invention, il est possible de déterminer indirectement le profil du front d'onde laser formé d'un ou de faisceaux lasers et d'asservir la phase du faisceau laser ou les phases de ces faisceaux lasers à un jeu de phases cibles prédéterminées qui définit un profil de front d'onde laser souhaité. On produit un profil de front d'onde laser ajusté à ce profil de front d'onde laser souhaité, permettant, par exemple, de pré-compenser les perturbations subies par le front d'onde lorsqu'il traverse un certain environnement, afin de produire une source laser de puissance optimale.

Avantageusement, l'étape de calcul de correction de phase comprend les sous-étapes successives suivantes :

- une première sous-étape d'attribution, mise en oeuvre par un premier sous-module d'attribution, consistant, afin de former un front d'onde laser cible, à attribuer la ou les phases cibles prédéterminées au ou aux faisceaux lasers ;
- une première sous-étape de calcul, mise en oeuvre par un premier sous-module de calcul, consistant à calculer un front d'onde laser image cible d'un champ laser image cible comprenant des portions images cibles, à partir du front d'onde laser cible et d'une matrice de mélange caractéristique du module de mélange, afin d'obtenir des phases images cibles associées aux portions images cibles ;
- une seconde sous-étape d'attribution, mise en oeuvre par un second sous-module d'attribution, consistant à attribuer les phases images cibles aux portions de champ laser dont les intensités mélangées sont mesurées à l'étape de mesure d'intensités, afin de former un front d'onde laser image ;
- une sous-étape de convergence, mise en oeuvre de façon itérative par un sous-module de convergence, consistant à obtenir, par convergence, des phases images théoriques, à partir des phases images cibles et des intensités mélangées, puis à attribuer lesdites phases images théoriques aux portions de champ laser afin de former un front d'onde laser image théorique ;
- une seconde sous-étape de calcul, mise en oeuvre par un second sous-module de calcul, consistant à calculer un front d'onde laser théorique, à partir du front d'onde laser image théorique et un inverse généralisé de la matrice de mélange, afin de déterminer une ou des phases théoriques associées à un ou des faisceaux lasers théoriques formant le front d'onde laser théorique ; et
- une sous-étape d'estimation, mise en oeuvre par un sous-module d'estimation, consistant à estimer une ou des valeurs de correction de phase, correspondant à la différence entre la ou les phases cibles et la ou les phases théoriques.

De préférence, la sous-étape de convergence, mise en oeuvre par le sous-module de convergence consiste à mettre en oeuvre une méthode de projections comprenant une succession itérative d'étapes suivante :

- une étape de détermination, mise en oeuvre par un élément de détermination, consistant à déterminer un front d'onde laser projeté d'un champ laser projeté, comprenant des portions projetées, à partir du front d'onde laser image, la matrice de mélange et l'inverse généralisé de la matrice de mélange, afin d'obtenir des phases projetées associées aux portions projetées ;

- une étape de test, mise en oeuvre par un élément de test, consistant à tester l'écart entre les phases projetées et les phases images cibles et à produire un signal représentatif se présentant :

  • soit dans un premier état si l'écart est supérieur à une valeur seuil prédéterminée ;
  • soit dans un second état si l'écart est inférieur ou égal à la valeur seuil prédéterminée ;

- une étape de décision, mise en oeuvre par un élément de décision, consistant :

  • si le signal produit se présente dans le premier état, à remplacer, dans l'étape de détermination au cours de l'itération suivante, les phases images cibles par les phases projetées ; ou
  • si le signal produit se présente dans le second état, à considérer les phases projetées comme des phases images théoriques à attribuer aux portions de champ laser pour former le front d'onde laser image théorique.

En outre, le procédé comprend une étape d'étalonnage, mise en oeuvre par un module d'étalonnage, consistant à déterminer les intensités du ou des faisceaux lasers formant le premier front d'onde laser.

Dans un mode de réalisation particulier, le procédé comprend également une étape de génération de faisceau laser, mise en oeuvre par un générateur de faisceau laser, consistant à générer un faisceau laser maître, l'étape de génération de faisceau laser précédant une étape de division de faisceau, mise en oeuvre par un diviseur de faisceau laser, consistant à diviser le faisceau laser maître en un ou des faisceaux lasers élémentaires formant le premier front d'onde laser.

Par ailleurs, préférentiellement, le procédé comprend également une étape d'amplification, mise en oeuvre par un module d'amplification, consistant à amplifier le ou les faisceaux lasers élémentaires.

Avantageusement, le procédé comprend également une étape de prélèvement, mise en oeuvre par un module de prélèvement, consistant à prélever une partie du ou des faisceaux lasers élémentaires formant le premier front d'onde, ladite partie du ou des faisceaux élémentaires prélevée représentant le ou les faisceaux lasers, formant un front d'onde représentatif du premier front d'onde laser.

La présente invention concerne également un système d'ajustement de profil d'un front d'onde laser (ci-après « système ») formé d'au moins un faisceau laser, à un profil de front d'onde laser souhaité, le ou les faisceaux lasers présentant des phases quelconques et des intensités, le front d'onde laser formé par le ou les faisceaux lasers représentant un premier front d'onde laser.

Selon l'invention, le système comprend :

- un module de mélange, configuré pour générer, à partir de phénomènes d'interférence entre le ou les faisceaux lasers, un champ laser formant un second front d'onde laser ;
- un module de mesure d'intensités, configuré pour mesurer des intensités mélangées du champ laser comprenant des portions de champ laser ;
- une unité de calcul, configurée pour calculer une ou des valeurs de correction de phase de la phase du faisceau laser ou des phases des faisceaux lasers, à partir des intensités du ou des faisceaux lasers, des intensités mélangées mesurées par le module de mesure d'intensités et d'une ou de phases cibles prédéterminées formant le profil du front d'onde laser souhaité ; et
- un module d'ajustement de phase, configuré pour appliquer la ou les valeurs de correction de phase, obtenues de l'unité de calcul, à la phase du faisceau laser ou aux phases des faisceaux lasers, afin d'ajuster le profil du premier front d'onde laser au profil du front d'onde laser souhaité.

Avantageusement, l'unité de calcul comprend les modules suivants :

- un premier sous-module d'attribution, configuré pour attribuer la ou les phases cibles prédéterminées au ou aux faisceaux lasers d'intensités, afin de former un front d'onde laser cible ;
- un premier sous-module de calcul, configuré pour calculer un front d'onde laser image cible d'un champ laser image cible comprenant des portions images cibles, à partir du front d'onde laser cible et d'une matrice de mélange, afin d'obtenir des phases images cibles associées aux portions images cibles ;
- un second sous-module d'attribution, configuré pour attribuer des phases images cibles aux portions de champ laser dont les intensités mélangées sont mesurées par le module de mesure d'intensités, afin de former un front d'onde laser image ;
- un sous-module de convergence, configuré pour obtenir, par convergence, des phases images théoriques, à partir des phases images cibles et des intensités mélangées, puis à attribuer lesdites phases images théoriques aux portions de champ laser afin de former un front d'onde laser image théorique ;
- un second sous-module de calcul, configuré pour calculer un front d'onde laser théorique, à partir du front d'onde laser image théorique et un inverse généralisé de la matrice de mélange, afin de déterminer une ou des phases théoriques associées à un ou des faisceaux lasers théoriques formant le front d'onde laser théorique ; et
- un sous-module d'estimation, configuré pour estimer une ou des valeurs de correction de phase correspondant à la différence entre la ou les phases cible et la ou les phases théoriques.

Dans un mode de réalisation particulier, le sous-module de convergence est configuré pour mettre en oeuvre une méthode de projections, ledit sous-module de convergence comprenant :

- un élément de détermination, configuré pour déterminer un front d'onde laser projeté d'un champ laser projeté comprenant des portions projetées, à partir du front d'onde laser image, la matrice de mélange et l'inverse généralisé de la matrice de mélange, afin d'obtenir des phases projetées associées aux portions projetées ;
- un élément de test, configuré pour tester l'écart entre les phases projetées et les phases images cibles et à émettre un signal représentatif se présentant :

  • soit dans un premier état si l'écart est supérieur à une valeur seuil prédéterminée ;
  • soit dans un second état si l'écart est inférieur ou égal à la valeur seuil prédéterminée ;

- un élément de décision, configuré :

  • si le signal reçu est dans le premier état, pour remplacer, dans le module de détermination, les phases images cibles par les phases projetées ; ou
  • si le signal reçu est dans le second état, pour considérer les phases projetées comme des phases images théoriques à attribuer aux portions de champ laser pour former le front d'onde laser image théorique

En outre, le système comprend un module d'étalonnage configuré pour déterminer les intensités du ou des faisceaux lasers formant le premier front d'onde laser.

De préférence, le système comporte un générateur de faisceau laser configuré pour générer un faisceau laser maître et un diviseur de faisceau laser configuré pour diviser ledit faisceau laser maître en un ou des faisceaux lasers élémentaires formant le premier front d'onde laser.

Par ailleurs, avantageusement, le système comporte un module d'amplification du ou des faisceaux lasers élémentaires et un module de prélèvement, ledit module de prélèvement étant, configuré pour prélever une partie du ou des faisceaux lasers élémentaires formant le premier front d'onde, ladite partie du ou des faisceaux élémentaires prélevée représentant le ou les faisceaux lasers formant un front d'onde laser représentatif du premier front d'onde laser.

Par ailleurs, le module de mesure d'intensités comprend un nombre de photodétecteurs au moins trois fois supérieur au nombre de faisceaux lasers.

Dans un mode de réalisation particulier, le module de mesure d'intensités est intégré au module de mélange.

En outre, le module de mélange comprend un élément diffractant, un élément réfractant, un élément ou une pluralité d'éléments diffusants, ou une combinaison de ces éléments.

BRÈVE DESCRIPTIONS DES DESSINS

L'invention sera mieux comprise, et d'autres buts, détails, caractéristiques et avantages de celle-ci apparaîtront plus clairement au cours de la description explicative détaillée qui va suivre, de modes de réalisations de l'invention données à titre d'exemple purement illustratif et non limitatif, en référence aux dessins schématiques annexés. Sur ces dessins :

- la figure 1 est un schéma synoptique d'un mode de réalisation du système ;
- la figure 2 représente un module de mélange et un module de mesure d'intensités selon un premier mode de réalisation du système ;
- la figure 3 représente un module de mélange et un module de mesure d'intensités selon un deuxième mode de réalisation du système ;
- la figure 4 représente un module de mélange et un module de mesure d'intensités selon un troisième mode de réalisation de l'invention ;
- la figure 5 est un schéma synoptique d'un mode de réalisation du procédé ; et
- la figure 6 est un schéma synoptique d'une étape de calcul de correction de phase selon un mode de réalisation du procédé.

Sur ces dessins, des références identiques désignent des éléments semblables.

DESCRIPTION DÉTAILLÉE

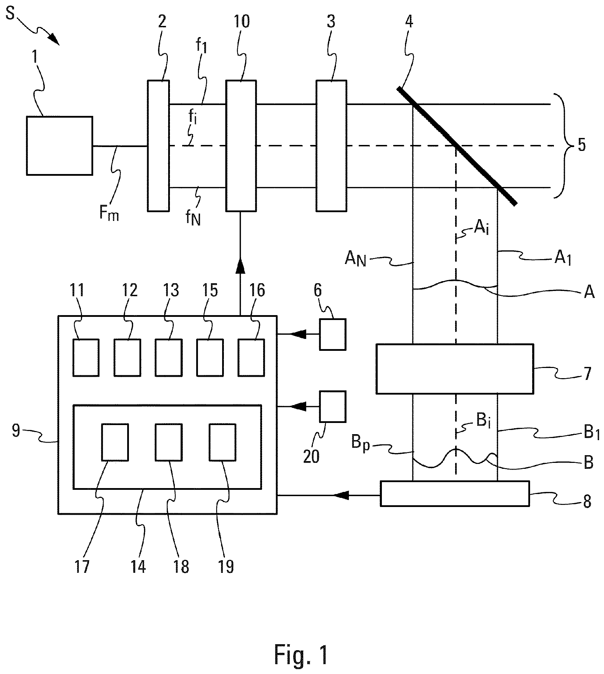

Le système S, dont un mode de réalisation est représenté schématiquement sur la figure 1, est destiné à ajuster un profil de front d'onde laser quelconque formé d'un ou de faisceaux lasers à un profil de front d'onde laser souhaité représenté par un jeu de phases cibles prédéterminées.

La signification du terme faisceau laser peut correspondre à une partie d'un rayon laser généré par un générateur de rayon laser ou le rayon laser lui-même.

Dans le cadre de la présente invention, le système laser S de la figure 1 comporte une boucle d'ajustement de profil d'un front d'onde laser, formé d'au moins un faisceau laser $A_i$ (avec i= 1, 2, ..., N) présentant une ou des phases $\varphi_i$ quelconques et des intensités $a_i$, par contre-réaction. La boucle d'ajustement comporte :

- un module de mélange 7 comprenant un ou plusieurs éléments de mélange, qui induisent des phénomènes d'interférence entre le ou les faisceaux lasers $A_i$. Ces phénomènes d'interférence génèrent un champ laser formant un front d'onde laser B dont le profil d'intensités dépend des différences de phases entre le ou les faisceaux laser $A_i$ ;

- un module de mesure d'intensités 8, agencé en aval du module de mélange 7, qui mesure des intensités $b_i$ du champ laser (ci-après « intensités mélangées »), le champ laser étant échantillonné en portions de champ laser $B_i$ (avec i= 1, 2, ..., P) ;
- une unité de calcul 9 de correction de phase qui calcule la ou les valeurs de correction de phase $\varphi_i^{cor}$, à partir des intensités $a_i$ et des intensités mélangées $b_i$ mesurées par le module de mesure d'intensités 8, ainsi que de la ou des phases cibles $\varphi_i^c$ prédéterminées représentant le profil du front d'onde laser souhaité ; et
- un module d'ajustement de phase 10, agencé entre le diviseur de faisceau laser 2 et le module d'amplification 3, qui applique la ou les valeurs de correction de phase $\varphi_i^{cor}$, obtenues de l'unité de calcul 9, à la phase $\varphi_i$ du faisceau laser $A_i$ ou aux phases $\varphi_i$ des faisceaux lasers $A_i$ afin d'ajuster le profil du front d'onde laser A au profil du front d'onde laser souhaité représenté par le jeu de phases cibles $\varphi_i^c$ prédéterminées.

Dans un mode de réalisation particulier, le système comprend un module d'étalonnage 6. Ce module d'étalonnage 6 peut, à titre d'exemple, être une unité de mémoire comprenant des valeurs d'intensités $a_i$ prédéterminées (voir figure 1) qui sont transmises au module de calcul 9. Les valeurs des intensités $a_i$ peuvent représenter des caractéristiques des faisceaux lasers, fournies par le fabriquant de faisceau laser. En outre, les intensités $a_i$, représentant le module au carré d'un champ laser représentatif du ou des faisceaux lasers $A_i$, peuvent être de valeur identique si on suppose que les faisceaux laser $A_i$ sont de puissance comparable.

En variante, le module d'étalonnage 6 peut comprendre une ou des photodiodes. La ou les photodiodes sont agencées sur le trajet du ou des faisceaux lasers $A_i$ et mesurent des intensités $a_i$ dont un signal représentatif est envoyé vers l'unité de calcul 9.

Par ailleurs, à titre d'exemple, le jeu de phases cibles $\varphi_i^c$ prédéterminées peut être fourni par un élément de mémoire 20 à l'unité de calcul 9.

Le module de mélange 7, qui peut être en deux ou trois dimensions, génère un recouvrement, à courte distance, du ou des faisceaux lasers $A_i$. Ce recouvrement

peut être partiel ou total. Il engendre des phénomènes d'interférence entre le ou les faisceaux lasers $A_i$. Le champ laser qui résulte de ces phénomènes d'interférence forme un front d'onde laser B. Des informations représentatives du front d'onde B sont reliées à des informations représentatives du front d'onde laser A par la relation $B = M.A$. Dans cette relation, $B$ est un vecteur de dimension P (P représentant le nombre de portions de champ laser) représentatif du front d'onde laser B, $A$ est un vecteur de dimension N (N représentant le nombre de faisceaux lasers $A_i$) représentatif du front d'onde laser A et $M$ est une matrice de mélange de dimension $P \times N$, qui caractérise notamment le module de mélange 7.

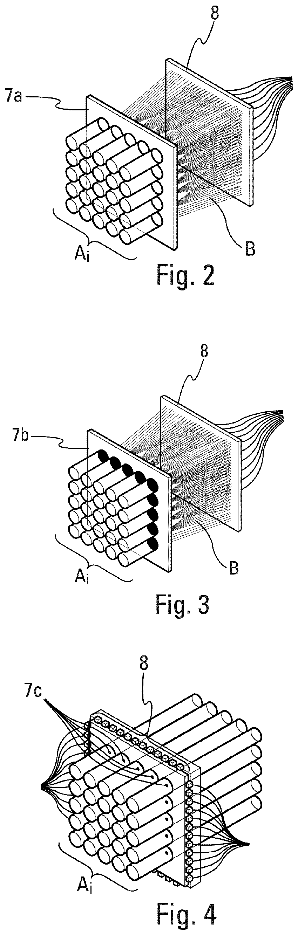

Dans un premier mode de réalisation tel que représenté sur la figure 2, le module de mélange 7 comprend un élément 7a représentant un composant diffractant. À titre d'exemple, l'élément 7a est une plaque percée d'ouvertures dont les positions sur la plaque correspondent aux positions des barycentres des faisceaux lasers $A_i$.

Dans un deuxième mode de réalisation tel que représenté sur la figure 3, le module de mélange 7 comprend un élément 7b représentant un composant réfractant, par exemple, une matrice de prismes ou de lentilles.

Dans un troisième mode de réalisation tel que représenté sur la figure 4, le module de mélange 7 comprend un ensemble d'éléments 7c représentant des composants diffractant agencés sur un substrat. La position de chaque composant diffractant correspond au barycentre de chaque faisceau $A_i$.

En variante (non représenté), le module de mélange 7 peut comprendre une combinaison des éléments 7a, 7b ou 7c.

Les phénomènes d'interférence entre le ou les faisceaux lasers $A_i$, générés par le module de mélange 7, produisent le champ laser formant le front d'onde laser B. Ce front d'onde laser B présente une distribution d'intensités $b_i$ qui dépend des différences de phases entre le ou les faisceaux lasers $A_i$. Le champ laser se propage jusqu'à un module de mesure d'intensités 8 qui le détecte.

Le module de mesure d'intensités 8 mesure les intensités mélangées $b_i$ correspondant aux modules au carré de portions du champ laser $B_i$. Un signal représentatif de ces intensités mélangées $b_i$ est envoyé vers l'unité de calcul 9. Le module de mesure d'intensités 8 comprend une pluralité de photodétecteurs dont le nombre P est au moins trois fois supérieur au nombre N de faisceaux lasers $A_i$.

Dans un mode de réalisation (voir figures 2 et 3), le module de mesure d'intensités 8 est agencé en aval du module de mélange 7.

Dans un autre mode de réalisation (voir figure 4), le module de mesure d'intensités 8 est intégré au module de mélange 7 et les photodétecteurs sont agencés sur le bord externe du composant formant le module de mélange 7.

Dans un mode de réalisation, le module d'ajustement de phase 10 comprend une pluralité de modulateurs de phase agencés sur le trajet du ou des faisceaux lasers $A_i$.

Par ailleurs, l'unité de calcul 9 permet, à partir de la matrice de mélange M, d'estimer le profil du front d'onde laser A, notamment de la ou des phases $\varphi_i$.

Dans le mode de réalisation représenté sur la figure 1, l'unité de calcul 9 comprend :

- un sous-module d'attribution 11, qui attribue le ou les phases cibles $\varphi_i^c$ prédéterminées au ou aux faisceaux lasers $A_i$, pour former un front d'onde laser cible $\tilde{A}$. Le ou les faisceaux laser $A_i$ sont déterminés à partir des intensités $a_i$ fournies par le module d'étalonnage 6 ;

- un sous-module de calcul 12, agencé en aval du sous-module d'attribution 11, qui calcule un front d'onde laser image cible $\tilde{B}$ d'un champ laser image cible comprenant des portions images cibles $\tilde{B}_l$, à partir du front d'onde laser cible $\tilde{A}$. Des informations représentatives du front d'onde laser image cible $\tilde{B}$ et des informations représentatives du front d'onde laser cible $\hat{A}$ sont reliées par la matrice de mélange $M$ via la relation $\tilde{B} = M.\tilde{A}$. Le front d'onde laser image cible $\tilde{B}$ représente les portions images cibles $\tilde{B}_l$ auxquelles sont associées des phases images cibles $\tilde{\theta}_l$ ;

- un sous-module d'attribution 13, qui attribue les phases images cibles $\tilde{\theta}_l$ obtenues du sous-module de calcul 12 agencé en amont, aux portions de champ laser $B_i$ dont les intensités mélangées $b_i$ sont mesurées par le module de mesure d'intensité 8, afin de former un front d'onde laser image $B'$ ;

- un sous-module de convergence 14, qui permet d'obtenir, par convergence, de façon itérative, des phases images théoriques $\theta''_i$ à partir des phases images cibles $\tilde{\theta}_l$, puis à attribuer lesdites phases images théoriques $\theta''_i$ aux portions de champ laser $B_i$, dont les intensités mélangées $b_i$ sont mesurées par le module de mesure d'intensité 8, afin de former un front d'onde laser image théorique $B''$ ;

- un sous-module de calcul 15, configuré pour calculer un front d'onde laser théorique $A''$ à partir du front d'onde laser image théorique B" obtenu du sous-module de convergence 14 agencé en amont. Des informations représentatives du front d'onde laser théorique $A''$ et des informations relatives du front d'onde laser image théorique $B''$ sont reliées par un inverse généralisé $M^+$ de la matrice M, de dimension $N \times P$, via la relation $A'' = M^+.B''$. Le front d'onde laser théorique $A''$ présente une phase théorique $\varphi''_i$ associée à un faisceau laser théorique $A''_i$ ou des phases théoriques $\varphi''_i$ associées à des faisceaux lasers théoriques $A''_i$ ; et

- un sous-module d'estimation 16, qui estime une ou des valeurs de correction de phase $\varphi_i^{cor}$, correspondant à la différence entre la ou les phases cibles $\varphi_i^c$ et la ou les phases théoriques $\varphi''_i$ obtenue du sous-module de calcul 15. Cette ou ces valeurs de correction de phase sont envoyées au module d'ajustement de phase 10 par le sous-module d'estimation 16.

Dans un mode de réalisation préféré, le sous-module de convergence 14 permet d'obtenir les phases images théoriques $\theta'_i$ associées au front d'onde laser image théorique $B''$ par une méthode de projection. Dans ce mode de réalisation, le sous-module de convergence 14 comprend un élément de détermination 17, un élément test 18, et un élément de décision 19.

L'élément de détermination 17 permet de déterminer un front d'onde laser projeté $B_p$ d'un champ laser projeté comprenant des portions projetées $B_{ip}$, à partir du front d'onde laser image $B'$ obtenu du sous-module d'attribution 13. Des informations représentatives du front d'onde laser projeté $B_p$ et des informations représentatives du front d'onde laser image $B'$ sont reliées par la matrice de mélange M et son inverse généralisé $M^+$ via la relation $B_p = M.M^+.B'$. Le front d'onde laser projeté $B_p$ est formé des portions projetées $B_{ip}$ associées à des phases projetées $\theta_{ip}$.

L'élément de test 18, qui succède à l'élément de détermination 17 est configuré pour tester l'écart entre les phases projetées $\theta_{ip}$ et les phases images cibles $\tilde{\theta}_l$ obtenues du sous-module de calcul 12 et à émettre un signal représentatif de cet écart entre phases. Le signal est soit dans un premier état $T_1$ si l'écart est supérieur à une valeur seuil prédéterminée, soit dans un second état $T_2$ si l'écart est inférieur ou égal à la valeur seuil prédéterminée.

L'élément de décision 19 est agencé en aval de l'élément de test 18 et reçoit le signal représentatif de l'écart entre phases. Si le signal reçu est dans le premier état, l'élément de décision 19 remplace, dans le module de détermination 17, les phases images cibles $\tilde{\theta}_l$ par les phases projetées $\theta_{ip}$. Si le signal reçu est dans le second état $T_2$, l'élément de décision 19 considère les phases projetées $\theta_{ip}$ comme des phases images théoriques $\theta'_i$ qui sont à attribuer aux portions de champ laser $B_i$ pour former le front d'onde laser image théorique $B''$.

Dans un autre mode de réalisation, le module d'ajustement de phase 10 permet d'ajuster, à partir de la ou des valeurs de corrections de phase calculées par l'unité de calcul 9, la phase $\varphi_i$ du faisceau laser $A_i$ ou les phases $\varphi_i$ des faisceaux lasers $A_i$ vers un jeu de phase cibles $\varphi_i^c$ prédéterminées. Le module d'ajustement de phase 10 permet d'ajuster le profil du front d'onde laser A au profil du front d'onde laser souhaité formé par le jeu de phases cibles $\varphi_i^c$ prédéterminées.

Par ailleurs, le système S peut comprendre un générateur de faisceau laser 1, agencé en amont de la boucle d'ajustement de profil de front d'onde laser par contre-réaction, qui génère un faisceau laser maître $F_m$. À titre d'exemple, le générateur de faisceau laser 1 peut être un oscillateur.

Un diviseur de faisceau laser 2 peut également être agencé en amont du générateur de faisceau laser 1 pour diviser le faisceau laser maître $F_m$ en un ou des faisceaux lasers élémentaires $f_i$ (avec i = 1, 2, ..., N), présentant les mêmes fréquences d'émission que le faisceau laser maître $F_m$ et formant le front d'onde A.

Dans un mode de réalisation particulier, le système S comprend également un module d'amplification 3, agencé en aval du module d'ajustement de phase 10. Ce module d'amplification 3 est configuré pour amplifier le signal lumineux du ou des faisceaux lasers élémentaires $f_i$ provenant du diviseur de faisceau laser 2.

De plus, un module de prélèvement 4 peut être agencé à la suite du module d'amplification 3. De plus le module de prélèvement peut être agencé en amont du module de mélange 7. À titre d'exemple, le module de prélèvement 4 comprend une ou des lames séparatrices qui, d'une part, laissent passer la plus grande partie du ou des faisceaux élémentaires $f_i$ jusqu'à une ou des sorties 5 du système laser S et, d'autre part, prélèvent respectivement une ou des parties de faisceaux lasers élémentaires $f_i$ pour former un ou des faisceaux lasers $A_i$. Le module de prélèvement 4 n'agit pas sur les phases. La phase $\varphi_i$ du faisceau laser élémentaire $f_i$ ou les phases $\varphi_i$ des faisceaux lasers élémentaires $f_i$ sont donc identiques respectivement à la phase $\varphi_i$ du faisceau laser $A_i$ ou aux phases $\varphi_i$ des faisceaux lasers $A_i$. Le ou les faisceaux lasers $A_i$ forment donc un front d'onde représentatif du front d'onde A.

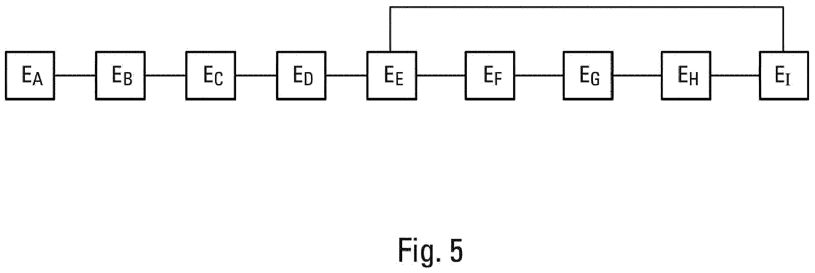

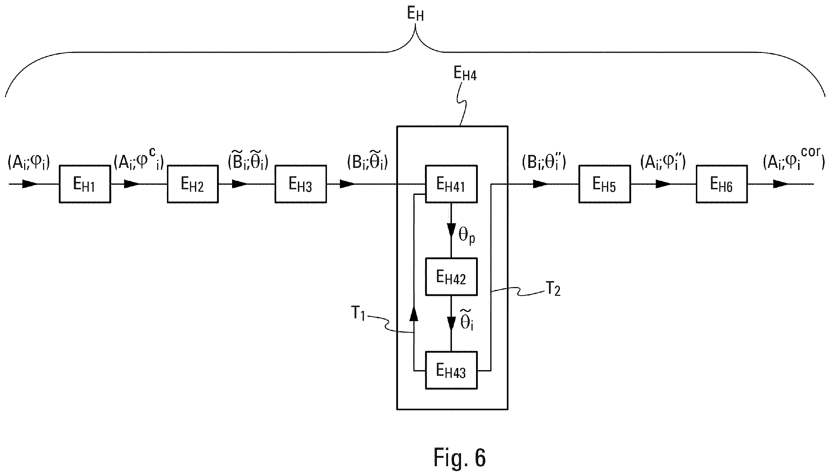

Le système S tel que décrit ci-dessus, met en oeuvre, de façon automatique, les étapes générales du procédé représenté sur les figures 5 et 6.

Au cours d'une étape de génération de faisceau laser $E_A$, le générateur de faisceau laser 1 génère le faisceau laser maître $F_m$, qui, lors d'une étape de division de faisceau laser $E_B$ est divisé, par le diviseur de faisceau laser 2, en un ou des faisceaux lasers élémentaires $f_i$, présentant une ou des fréquences identiques à celle du faisceau laser maître $F_m$.

Une étape d'amplification $E_C$ permet ensuite d'augmenter le signal lumineux du ou des faisceaux lasers élémentaires $f_i$, émis à l'étape précédente de division de faisceau laser $E_B$. Le ou les faisceaux lasers élémentaires $f_i$ amplifiés par le module d'amplification 3 traversent le module de prélèvement 4. Au cours d'une étape de prélèvement $E_E$, postérieure à l'étape d'amplifications $E_C$, une partie du ou des faisceaux lasers élémentaires $f_i$ est prélevée, pour former respectivement un ou des faisceaux lasers $A_i$. Le ou les faisceaux lasers $A_i$

présentent une phase ou des phases $\varphi_i$ identiques à celles du ou des faisceaux lasers élémentaires $f_i$. Le ou les faisceaux lasers $A_i$ forment un front d'onde laser A quelconque dont le profil est à ajuster à un front d'onde laser souhaité.

Au cours d'une étape d'étalonnage $E_D$, les intensités $a_i$ du ou des faisceaux lasers $A_i$ sont transmises, par le module de mesure d'étalonnage 6, vers l'unité de calcul 9.

Comme représenté sur la figure 5, le procédé comprend une succession itérative d'étapes. Ainsi, lors d'une étape de mélange $E_F$, le front d'onde laser A formé du ou des faisceaux lasers $A_i$ traverse le module de mélange 7, ce qui génèrent des phénomènes d'interférence entre le ou les faisceaux lasers $A_i$. Il résulte de ces interférences un champ laser formant un nouveau front d'onde laser B. Ce front d'onde B présente des phases mélangées $\theta_i$. Le champ laser se propage jusqu'au module de mesure d'intensités 8 qui détecte des portions de champ laser $B_i$. Au cours d'une étape de mesure d'intensités $E_G$, des intensités mélangées $b_i$ de ces portions de champ laser $B_i$ sont mesurées. Le nombre P de portions de champ laser $B_i$ détectées correspond au nombre de photodétecteurs du module de mesure d'intensités 8. Il peut être au moins trois fois plus important que le nombre N de faisceaux lasers $A_i$.

À partir du jeu de phases cibles $\varphi_i^c$ prédéterminées, ainsi que des intensités $a_i$ et des intensités mélangées $b_i$, une ou des valeurs de correction de phase $\varphi_i^{cor}$ de la phase $\varphi_i$ du faisceau laser $A_i$ ou des phases $\varphi_i$ des faisceaux lasers $A_i$ sont calculées par l'unité de calcul 9, lors d'une étape de calcul de correction de phase $E_H$.

Au cours d'une étape d'ajustement de phase $E_I$, le module d'ajustement de phase 10 applique la ou les valeurs de correction de phase $\varphi_i^{cor}$, obtenues à l'étape précédente $E_H$, à la phase $\varphi_i$ du faisceau laser $A_i$ ou aux phases $\varphi_i$ des faisceaux lasers $A_i$. Cette étape d'ajustement $E_I$ permet de rapprocher le profil du front d'onde laser A formé des faisceaux lasers $A_i$ au profil du front d'onde laser souhaité représenté par le jeu de phases cibles $\varphi_i^c$ prédéterminées. Les étapes précédentes sont réitérées jusqu'à l'obtention d'un profil de front d'onde A ajusté au profil de front d'onde laser souhaité.

Dans un mode de réalisation particulier représenté sur la figure 6, l'étape de calcul de correction de phase $E_H$ comprend une succession de sous-étapes. Ainsi, lors d'une sous-étape d'attribution $E_{H1}$ mise en oeuvre par le sous-module d'attribution 11, la ou les phases cibles $\varphi_i^c$ prédéterminées sont attribuées au ou aux faisceaux lasers $A_i$, en remplacement de leurs phases $\varphi_i$ qui sont jusqu'alors inconnues. Le ou les faisceaux lasers $A_i$ de phases $\varphi_i^c$ forment un front d'onde laser cible $\tilde{A}$.

Un front d'onde laser image cible $\tilde{B}$ d'un champ laser image cible comprenant des portions images cibles $\tilde{B}_t$ est alors calculé à partir du front d'onde laser cible $\tilde{A}$ et de la matrice de mélange $M$. Des informations représentatives du front d'onde laser cible $\tilde{A}$ sont représentées par un vecteur de dimension N dont chaque élément est une valeur de faisceau laser $A_i$. La matrice de mélange $M$ est une matrice de dimension $P \times N$. Au cours d'une sous-étape de calcul $E_{H2}$ mise en oeuvre par le sous-module de calcul 12, des informations représentatives du front d'onde laser image cible $\tilde{B}$, représenté par un vecteur de dimension P dont chaque élément est une valeur d'une portion image cible $\tilde{B}_l$, sont calculées via la relation matricielle $\tilde{B} = M.\tilde{A}$. Les phases images cibles $\tilde{\theta}_l$, associées aux portions images cibles $\tilde{B}_l$, ainsi obtenues sont, lors d'une sous-étape d'attribution $E_{H3}$ mise en oeuvre par le sous-module d'attribution 13, attribuées aux portions de champ laser $B_i$ dont les intensités mélangées $b_i$ ont été mesurées à l'étape de mesure d'intensités $E_G$. Les phases images cibles $\tilde{\theta}_i$ représentent les phases du front d'onde après le module de mélange si les phases du front d'onde initial A d'intensités mesurées $a_i$ sont les phases cibles $\varphi_i^c$ prédéterminées du profil d'onde souhaité.

Les phases images cibles $\tilde{\theta}_l$ servent alors de valeurs initiales au cours d'une sous-étape de convergence $E_{H4}$ mise en oeuvre par le sous-module de convergence 14. Les phases images cibles $\tilde{\theta}_l$ sont ensuite modifiées par un processus itératif, jusqu'à obtenir leurs convergences vers des valeurs appelées phases images théoriques $\theta'_i$.

Ces phases images théoriques $\theta'_i$ sont ensuite attribuées aux portions de champ laser $B_i$, formant ainsi un front d'onde laser image théorique B".

À partir de ce front d'onde laser image théorique B" dont des informations représentatives sont représentées par un vecteur de dimension P et de l'inverse généralisé $M^+$ de la matrice de mélange de dimension $N \times P$, on calcule, au cours d'une sous-étape de calcul $E_{H5}$ mise en oeuvre par le sous-module de calcul 15, un front d'onde laser théorique A" dont des informations représentatives sont représentées par un vecteur de dimension N, via la relation $A" = M^+.B"$.

Au cours d'une sous-étape d'estimation $E_{H6}$ mise en oeuvre par le sous-module d'estimation 16, la ou les valeurs de correction de phase $\varphi_i^{cor}$ sont estimées.

Cette ou ces valeurs de correction de phase $\varphi_i^{cor}$ correspondent à la différence entre la ou les phases cibles $\varphi_i^c$ prédéterminées et la ou les phases théoriques $\varphi''_i$ formant le front d'onde laser théorique $A''$, calculé à la sous-étape de calcul $E_{H5}$.

Comme expliqué ci-dessus, la ou les valeurs de correction de phase $\varphi_i^{cor}$ modifient, au cours de l'étape d'ajustement de phase $E_l$, la phase $\varphi_i$ du faisceau laser $A_i$ ou les phases $\varphi_i$ des faisceaux lasers $A_i$, permettant de rapprocher le profil du front d'onde laser A du profil du front d'onde laser souhaité. La ou les valeurs de correction de phase $\varphi_i^{cor}$ modifient également, de manière indirecte, le champ laser de front d'onde B et donc les intensités mélangées $b_i$. Les étapes $E_F$ à $E_l$, ainsi que les sous-étapes qui les composent, sont donc réitérées jusqu'à l'ajustement du profil du front d'onde A au profil du front d'onde laser souhaité. Cet ajustement correspond, après convergence, à l'obtention d'un champ laser stationnaire.

En variante, l'étape d'ajustement de phase $E_l$ permet la modification de la phase du faisceau laser élémentaire $f_i$ ou des phases des faisceaux élémentaires $f_i$, la phase $\varphi_i$ du faisceau laser $A_i$ ou les phases $\varphi_i$ des faisceaux lasers $A_i$ étant identiques à celles du ou des faisceaux élémentaires $f_i$.

Dans un mode de réalisation particulier, les phases images théoriques $\theta''_i$ sont obtenues à l'issue de la sous-étape de convergence $E_{H4}$, par une méthode itérative de projections.

Comme représenté sur la figure 6, la sous-étape de convergence $E_{H4}$ peut comprendre une étape de détermination $E_{H41}$ mise en oeuvre par l'élément de détermination 17, au cours de laquelle est calculé un front d'onde laser projeté $B_p$ d'un champ laser projeté comprenant des portions projetées $B_{ip}$. Ce front d'onde laser projeté $B_p$ est obtenu à partir du front d'onde laser image $B'$ dont des informations représentatives sont représentées par un vecteur de dimension P et calculées à la sous-étape d'attribution $E_{H3}$. L'application successive de l'inverse généralisé $M^+$ de la matrice de mélange puis de la matrice de mélange M au vecteur de dimension P représentatif du front d'onde laser image $B'$ permet d'obtenir un vecteur de dimension P représentatif du front d'onde laser projeté $B_p$. La relation matricielle entre le front d'onde laser projeté et le front d'onde laser image s'écrit $B_p = M.M^+.B'$. Le front d'onde laser projeté $B_p$ ainsi obtenu est formé des portions projetées $B_{ip}$ associées à des phases projetées $\theta_{ip}$.

Au cours d'une étape de test $E_{H42}$ mise en oeuvre par l'élément de test 18, l'écart entre les phases projetées $\theta_{ip}$, obtenues à l'étape de détermination $E_{H41}$ précédente, et les phases images cibles $\tilde{\theta}_i$, obtenues à la sous-étape de calcul $E_{H2}$, est comparé à une valeur seuil prédéterminée qui peut être infinitésimale. Le résultat de ce test génère un signal analysé lors d'une étape de décision $E_{H43}$ mise en oeuvre par l'élément de décision 19. Le signal peut être soit dans un premier état $T_1$, soit dans un second état $T_2$.

Tant que le signal envoyé à l'élément de décision 19 est dans le premier état $T_1$, l'écart entre les phases projetées $\theta_{ip}$ et les phases images $\tilde{\theta}_i$ est supérieur à la valeur seuil prédéterminée. L'étape de décision $E_{H43}$ consiste à attribuer les phases projetées $\theta_{ip}$ aux portions de champ laser $B_i$ de manière à former un nouveau front d'onde laser image $B'$. Ce nouveau front image $B'$ est utilisé lors de l'étape de détermination de l'itération suivante pour calculer de nouvelles phases projetées $\theta_{ip}$.

Lorsque l'écart entre les phases projetées $\theta_{ip}$ et les phases images $\tilde{\theta}_i$ est inférieur ou égal à la valeur seuil prédéterminée, on estime que les phases projetées $\theta_{ip}$ ont alors convergé vers des valeurs stables. Le signal envoyé à l'élément de décision 19 est dans le second état $T_2$. L'étape de décision $E_{H43}$ consiste alors à définir les phases projetées $\theta_{ip}$ comme des phases images théoriques $\theta''_i$. Ces phases images théoriques $\theta''_i$ sont ensuite attribuées aux portions de champ laser $B_i$ dont les intensités mélangées $b_i$ ont été mesurées à l'étape de mesure d'intensités $E_G$ pour former le front d'onde laser image théorique $B''$. Comme expliqué ci-dessus, le front d'onde laser image théorique $B''$ est utilisé, au cours de la sous-étape de calcul $E_{H5}$, pour calculer le front d'onde laser théorique $A''$.

**Revendications**

1. Procédé d'ajustement de profil d'un front d'onde laser formé d'au moins un faisceau laser ($A_i$), à un profil de front d'onde laser souhaité, le ou les faisceaux lasers ($A_i$) présentant des phases ($\varphi_i$) quelconques et des intensités ($a_i$), ledit front d'onde laser formé par le ou les faisceaux lasers ($A_i$) correspondant à un premier front d'onde laser (A), ledit procédé comprenant la succession itérative d'étapes suivante :

    - une étape de mélange ($E_F$) du ou des faisceaux lasers ($A_i$), mise en oeuvre par un module de mélange (7), consistant à générer, à partir de phénomènes d'interférence entre le ou les faisceaux lasers ($A_i$), un champ laser formant un second front d'onde laser (B) ;
    - une étape de mesure d'intensité ($E_G$), mise en oeuvre par un module de mesure d'intensités (8), consistant à mesurer des intensités mélangées ($b_i$) du champ laser comprenant des portions de champ laser ($B_i$) ;

- une étape de calcul de correction de phase ($E_H$), mise en oeuvre par une unité de calcul (9), consistant à calculer une ou des valeurs de correction de phase $\left(\varphi_i^{cor}\right)$ de la phase ($\varphi_i$) du faisceau laser ($A_i$) ou des phases ($\varphi_i$) des faisceaux lasers ($A_i$), à partir des intensités ($a_i$) du ou des faisceaux lasers ($A_i$), des intensités mélangées ($b_i$) mesurées à l'étape de mesure d'intensités ($E_G$) et d'une ou de phases cibles $\left(\varphi_i^c\right)$ prédéterminées formant le profil du front d'onde laser souhaité ; et

- une étape d'ajustement de phase ($E_I$), mise en oeuvre par un module d'ajustement de phase (10), consistant à appliquer la ou les valeurs de correction de phase $\left(\varphi_i^{cor}\right)$, obtenues à l'étape de calcul de correction de phase ($E_H$), à la phase ($\varphi_i$) du faisceau laser ($A_i$) ou aux phases ($\varphi_i$) des faisceaux lasers ($A_i$), afin d'ajuster le profil du premier front d'onde laser (A) au profil du front d'onde laser souhaité.

2. Procédé selon la revendication 1,
**caractérisé en ce que** l'étape de calcul de correction de phase ($E_H$) comprend les sous-étapes successives suivantes :

    - une première sous-étape d'attribution ($E_{H1}$), mise en oeuvre par un premier sous-module d'attribution (11), consistant, afin de former un front d'onde laser cible ($\tilde{A}$), à attribuer la ou les phases cibles $\left(\varphi_i^c\right)$ prédéterminées au ou aux faisceaux lasers ($A_i$) ;
    - une première sous-étape de calcul ($E_{H2}$), mise en oeuvre par un premier sous-module de calcul (12), consistant à calculer un front d'onde laser image cible ($\tilde{B}$) d'un champ laser image cible ($\tilde{B}$) comprenant des portions images cibles ($\tilde{B}_i$), à partir du front d'onde laser cible ($\tilde{A}$) et d'une matrice de mélange ($M$) caractéristique du module de mélange (7), afin d'obtenir des phases images cibles ($\tilde{\theta}_i$) associées aux portions images cibles ($\tilde{B}_i$) ;
    - une seconde sous-étape d'attribution ($E_{H3}$), mise en oeuvre par un second sous-module d'attribution (13), consistant à attribuer les phases images cibles ($\tilde{\theta}_i$) aux portions de champ laser ($B_i$) dont les intensités mélangées ($b_i$) sont mesurées à l'étape de mesure d'intensités ($E_G$), afin de former un front d'onde laser image ($B'$) ;
    - une sous-étape de convergence ($E_{H4}$), mise en oeuvre de façon itérative par un sous-module de convergence (14), consistant à obtenir, par convergence, des phases images théoriques ($\theta''_i$), à partir des phases images cibles ($\tilde{\theta}_i$) et des intensités mélangées ($b_i$), puis à attribuer lesdites phases images théoriques ($\theta''_i$) aux portions de champ laser ($B_i$) afin de former un front d'onde laser image théorique ($B''$) ;
    - une seconde sous-étape de calcul ($E_{H5}$), mise en oeuvre par un second sous-module de calcul (15), consistant à calculer un front d'onde laser théorique ($A''$) à partir du front d'onde laser image théorique ($B''$) et un inverse généralisé ($M^+$) de la matrice de mélange, afin de déterminer une ou des phases théoriques ($\varphi''_i$) associées à un ou des faisceaux lasers théoriques ($A''_i$) formant le front d'onde laser théorique ($A''$) ; et
    - une sous-étape d'estimation ($E_{H6}$), mise en oeuvre par un sous-module d'estimation (16), consistant à estimer une ou des valeurs de correction de phase $\left(\varphi_i^{cor}\right)$, correspondant à la différence entre la ou les phases cibles $\left(\varphi_i^c\right)$ et la ou les phases théoriques ($\varphi''_i$).

3. Procédé selon la revendication 2,
**caractérisé en ce que** la sous-étape de convergence ($E_{H4}$), mise en oeuvre par le sous-module de convergence (14) consiste à mettre en oeuvre une méthode de projections comprenant une succession itérative d'étapes suivante :

    - une étape de détermination ($E_{H41}$), mise en oeuvre par un élément de détermination (17), consistant à déterminer un front d'onde laser projeté ($B_p$) d'un champ laser projeté comprenant des portions projetées ($B_{ip}$), à partir du front d'onde laser image ($B'$), la matrice de mélange ($M$) et l'inverse généralisé ($M^+$) de la matrice de mélange, afin d'obtenir des phases projetées ($\theta_{ip}$) associées aux portions projetées ($B_{ip}$) ;
    - une étape de test ($E_{H42}$), mise en oeuvre par un élément de test (18), consistant à tester l'écart entre les phases projetées ($\theta_{ip}$) et les phases images cibles ($\tilde{\theta}_i$) et à produire un signal représentatif se présentant :

        • soit dans un premier état ($T_1$) si l'écart est supérieur à une valeur seuil prédéterminée ;
        • soit dans un second état ($T_2$) si l'écart est inférieur ou égal à la valeur seuil prédéterminée ;

    - une étape de décision ($E_{H43}$), mise en oeuvre par un élément de décision (19), consistant :

• si le signal produit se présente dans le premier état ($T_1$), à remplacer, dans l'étape de détermination ($E_{H41}$) au cours de l'itération suivante, les phases images cibles ($\tilde{\theta}_i$) par les phases projetées ($\theta_{ip}$) ; ou

• si le signal produit se présente dans le second état ($T_2$), à considérer les phases projetées ($\theta_{ip}$) comme des phases images théoriques ($\theta''_i$) à attribuer aux portions de champ laser ($B_i$) pour former le front d'onde laser image théorique ($B''$).

4. Procédé selon l'une quelconque des revendications précédentes, **caractérisé en ce qu'**il comprend une étape d'étalonnage ($E_D$), mise en oeuvre par un module d'étalonnage (6), consistant à déterminer les intensités ($a_i$) du ou des faisceaux lasers ($A_i$) formant le premier front d'onde laser (A).

5. Procédé selon l'une quelconque des revendications précédentes, **caractérisé en ce qu'**il comprend également une étape de génération de faisceau laser ($E_A$), mise en oeuvre par un générateur de faisceau laser (1), l'étape de génération de faisceau laser ($E_A$) consistant à générer un faisceau laser maître ($F_m$) précédant une étape de division de faisceau ($E_B$), mise en oeuvre par un diviseur de faisceau laser (2), consistant à diviser le faisceau laser maître ($F_m$) en un ou des faisceaux lasers élémentaires ($f_i$) formant le premier front d'onde laser (A).

6. Procédé selon l'une quelconque des revendications précédentes, **caractérisé en ce qu'**il comprend également une étape d'amplification ($E_C$), mise en oeuvre par un module d'amplification (3), consistant à amplifier le ou les faisceaux lasers élémentaires ($f_i$).

7. Procédé selon l'une quelconque des revendications précédentes, **caractérisé en ce qu'**il comprend également une étape de prélèvement ($E_E$), mise en oeuvre par un module de prélèvement (4), consistant à prélever une partie du ou des faisceaux lasers élémentaires ($f_i$) formant le premier front d'onde laser (A), ladite partie du ou des faisceaux élémentaires ($f_i$) prélevée représentant le ou les faisceaux lasers ($A_i$), formant un front d'onde représentatif du premier front d'onde laser (A).

8. Système d'ajustement de profil d'un front d'onde laser formé d'au moins un faisceau laser ($A_i$), à un profil de front d'onde laser souhaité, le ou les faisceaux lasers ($A_i$) présentant des phases ($\varphi_i$) quelconques et des intensités ($a_i$), ledit front d'onde laser formé par le ou les faisceaux lasers ($A_i$) représentant un premier front d'onde laser (A), ledit système comprenant :

- un module de mélange (7), configuré pour générer, à partir de phénomènes d'interférence entre le ou les faisceaux lasers ($A_i$), un champ laser formant un second front d'onde laser (B) ;
- un module de mesure d'intensités (8), configuré pour mesurer des intensités mélangées ($b_i$) du champ laser comprenant des portions de champ laser ($B_i$) ;
- une unité de calcul (9), configurée pour calculer une ou des valeurs de correction de phase $\left(\varphi_i^{cor}\right)$ de la phase ($\varphi_i$) du faisceau laser ($A_i$) ou des phases ($\varphi_i$) des faisceaux lasers ($A_i$), à partir des intensités ($a_i$) du ou des faisceaux lasers ($A_i$), des intensités mélangées ($b_i$) mesurées par le module de mesure d'intensités (8) et d'une ou de phases cibles $\left(\varphi_i^c\right)$ prédéterminées formant le profil du front d'onde laser souhaité ; et
- un module d'ajustement de phase (10), configuré pour appliquer la ou les valeurs de correction de phase $\left(\varphi_i^{cor}\right)$, obtenues de l'unité de calcul (9), à la phase ($\varphi_i$) du faisceau laser ($A_i$) ou aux phases ($\varphi_i$) des faisceaux lasers ($A_i$), afin d'ajuster le profil du premier front d'onde laser (A) au profil du front d'onde laser souhaité.

9. Système selon la revendication 8, **caractérisé en ce que** l'unité de calcul (9) comprend les modules suivants :

- un premier sous-module d'attribution (11), configuré pour attribuer la ou les phases cibles $\left(\varphi_i^c\right)$ prédéterminées au ou aux faisceaux lasers ($A_i$) d'intensités ($a_i$), afin de former un front d'onde laser cible ($\tilde{A}$) ;
- un premier sous-module de calcul (12), configuré pour calculer un front d'onde laser image cible ($\tilde{B}$) d'un champ laser image cible comprenant des portions images cibles ($\tilde{B}_i$), à partir du front d'onde laser cible ($\tilde{A}$) et d'une matrice de mélange ($M$), afin d'obtenir des phases images cibles ($\tilde{\theta}_i$) associées aux portions images cibles ($\tilde{B}_i$) ;
- un second sous-module d'attribution (13), configuré pour attribuer des phases images cibles ($\tilde{\theta}_i$) aux portions de champ laser ($B_i$) dont les intensités mélangées ($b_i$) sont mesurées par le module de mesure d'intensités (8), afin de former un front d'onde laser image ($B'$) ;
- un sous-module de convergence (14), configuré pour obtenir, par convergence, des phases

images théoriques ($\theta'_i$), à partir des phases images cibles ($\tilde{\theta_i}$) et des intensités mélangées ($b_i$), puis à attribuer lesdites phases images théoriques ($\theta'_i$) aux portions de champ laser ($B_i$) afin de former un front d'onde laser image théorique ($B''$) ;

- un second sous-module de calcul (15), configuré pour calculer un front d'onde laser théorique ($A''$) à partir du front d'onde laser image théorique ($B''$) et un inverse généralisé ($M^+$) de la matrice de mélange, afin de déterminer une ou des phases théoriques ($\varphi''_i$) associées à un ou des faisceaux lasers théoriques ($A''_i$) formant le front d'onde laser théorique ($A''$) ; et

- un sous-module d'estimation (16), configuré pour estimer une ou des valeurs de correction de phase $\left(\varphi_i^{cor}\right),$ correspondant à la différence entre la ou les phases cibles $\left(\varphi_i^c\right)$ et la ou les phases théoriques ($\varphi''_i$).

10. Système selon la revendication 9, **caractérisé en ce que** le sous-module de convergence (14) est configuré pour mettre en oeuvre une méthode de projections, ledit sous-module de convergence (14) comprenant :

- un élément de détermination (17), configuré pour déterminer un front d'onde laser projeté ($B_p$) d'un champ laser projeté comprenant des portions projetées ($B_{ip}$), à partir du front d'onde laser image (B'), la matrice de mélange ($M$) et l'inverse généralisé ($M^+$) de la matrice de mélange, afin d'obtenir des phases projetées ($\theta_{ip}$) associées aux portions projetées ($B_{ip}$) ;
- un élément de test (18), configuré pour tester l'écart entre les phases projetées ($\theta_{ip}$) et les phases images cibles ($\tilde{\theta_i}$) et à émettre un signal représentatif se présentant :

• soit dans un premier état ($T_1$) si l'écart est supérieur à une valeur seuil prédéterminée ;
• soit dans un second état ($T_2$) si l'écart est inférieur ou égal à la valeur seuil prédéterminée ;

- un élément de décision (19), configuré :

• si le signal reçu est dans le premier état ($T_1$), pour remplacer, dans le module de détermination (17), les phases images cibles ($\tilde{\theta_i}$) par les phases projetées ($\theta_{ip}$) ; ou
• si le signal reçu est dans le second état ($T_2$), pour considérer les phases projetées ($\theta_{ip}$) comme des phases images théoriques ($\theta'_i$) à attribuer aux portions de champ laser ($B_i$) pour former le front d'onde laser image théorique ($B''$).

11. Système selon l'une quelconque des revendications 8 à 10, **caractérisé en ce qu'**il comprend un module d'étalonnage (6) configuré pour déterminer les intensités ($a_i$) du ou des faisceaux lasers ($A_i$) formant le premier front d'onde laser (A).

12. Système selon l'une quelconque des revendications 8 à 11, **caractérisé en ce qu'**il comporte un générateur de faisceau laser (1) configuré pour générer un faisceau laser maître ($F_m$) et un diviseur de faisceau laser (2) configuré pour diviser ledit faisceau laser maître ($F_m$) en un ou des faisceaux lasers élémentaires ($f_i$) formant le premier front d'onde laser (A).

13. Système selon l'une quelconque des revendications 8 à 12, **caractérisé en ce qu'**il comporte un module d'amplification (3) du ou des faisceaux lasers élémentaires ($f_i$) et un module de prélèvement (4), ledit module de prélèvement (4) étant configuré pour prélever une partie du ou des faisceaux lasers élémentaires ($f_i$) formant le premier front d'onde laser (A), ladite partie du ou des faisceaux élémentaires ($f_i$) prélevée représentant le ou les faisceaux lasers ($A_i$) formant un front d'onde laser représentatif du premier front d'onde laser (A).

14. Système selon l'une quelconque des revendications 8 à 13, **caractérisé en ce que** le module de mesure d'intensités (8) comprend un nombre (P) de photodétecteurs au moins trois fois supérieur au nombre (N) de faisceaux lasers ($A_i$).

15. Système selon l'une quelconque des revendications 8 à 14, **caractérisé en ce que** le module de mesure d'intensités (8) est intégré au module de mélange (7).

16. Système selon l'une quelconque des revendications 8 à 15, **caractérisé en ce que** le module de mélange (7) comprend un élément diffractant (7a), un élément réfractant (7b), un éléments ou une pluralité d'éléments diffusants (7c), ou une combinaison de ces éléments (7a, 7b, 7c).

Fig. 1

Fig. 2

Fig. 3

Fig. 4

Fig. 5

Fig. 6

Europäisches
Patentamt

European
Patent Office

Office européen
des brevets

**RAPPORT DE RECHERCHE EUROPEENNE**

Numéro de la demande

EP 19 15 1455

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2015/181130 A1 (THALES SA [FR]) 3 décembre 2015 (2015-12-03) * figure 2 * * pages 7-9 * * le document en entier * ----- | 1-16 | INV. H01S3/10 G02F1/01 H01S3/13 H01S3/23 |
| X | US 2011/280581 A1 (CHANN BIEN [US] ET AL) 17 novembre 2011 (2011-11-17) * abrégé; figure 3A * ----- | 1,8 | |
| X | DE 10 2010 033630 A1 (NORTHROP GRUMMAN SYSTEMS CORP [US]) 10 février 2011 (2011-02-10) * abrégé; figure 22 * ----- | 1,8 | |

|  |
|---|
| DOMAINES TECHNIQUES RECHERCHES (IPC) |
| H01S G02F |

Le présent rapport a été établi pour toutes les revendications

| Lieu de la recherche | Date d'achèvement de la recherche | Examinateur |
|---|---|---|
| Munich | 8 mai 2019 | Lendroit, Stéphane |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 15 1455

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-05-2019

| Document brevet cité au rapport de recherche | Date de publication | Membre(s) de la famille de brevet(s) | Date de publication |
|---|---|---|---|
| WO 2015181130 A1 | 03-12-2015 | CN 106663913 A | 10-05-2017 |
| | | EP 3149813 A1 | 05-04-2017 |
| | | ES 2704111 T3 | 14-03-2019 |
| | | FR 3021761 A1 | 04-12-2015 |
| | | JP 2017517153 A | 22-06-2017 |
| | | KR 20170012445 A | 02-02-2017 |
| | | US 2017201063 A1 | 13-07-2017 |
| | | WO 2015181130 A1 | 03-12-2015 |
| US 2011280581 A1 | 17-11-2011 | AUCUN | |
| DE 102010033630 A1 | 10-02-2011 | DE 102010033630 A1 | 10-02-2011 |
| | | JP 5616714 B2 | 29-10-2014 |
| | | JP 2011043808 A | 03-03-2011 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016062942 A
- WO 2015181130 A
- US 2011280581 A
- DE 102010033630